# EUROPEAN PATENT SPECIFICATION

(11) **EP 2 484 949 B1**
(45) Date of publication and mention of the grant of the patent: **28.08.2013**
(21) Application number: 11425024.4
(22) Date of filing: 08.02.2011
(51) Int. Cl.: F16K 37/00

(54) **Hydraulic valve device with associated spool displacement transducer**
Hydraulische Ventilvorrichtung mit zugehörigem Spulenverschiebungswandler
Dispositif de vanne hydraulique doté d'un transducteur de déplacement de bobine associé

(43) Date of publication of application: 08.08.2012
(73) Proprietor: Walvoil S.p.A., 42100 Reggio Emilia (IT)
(72) Inventor: Beneventi, Alessandro, 42124 Reggio Emilia (IT)
(74) Representative: Guareschi, Antonella

(56) References cited:
- EP-A1- 1 241 437
- FR-A1- 2 897 933
- US-A- 4 107 604
- US-A- 5 565 770
- US-A- 6 152 172

## Description

### Background Of The Invention

The invention concerns an hydraulic valve comprising a body, mono-block or bankable, in which is present at least a spool movable axially for controlling flu id flow which flows in inner channels of said hydraulic valve, and relates to at least a sensor designed to sense the position of the spool of said hydraulic valve and give out a corresponding electrical signal.

### Description Of The Related Art

In the prior art it is desirable monitor and/or check the movements of spools within the spool bore of the hydraulic valve devices.

US4107604 discloses an "Hall effect displacement transducer using a bar magnet parallel to the plane of the Hall device" - A position indicating device for providing a generally linear output in response to displacement; the system includes a Hall effect device and apparatus for providing a response therein in accordance to displacement of a movable stylus or plunger and the method of making the same.

US5565770, showing the features of the preamble of claim 1, relates to magnetic sensors, and in particular to sensors for cyclic lubricant feeders utilizing reciprocating distributor valves, the sensor being a magnetic sensor for sensing the movement of a reciprocating valve. The sensor provides a threaded nozzle for screwing into the block with a bore therethrough. A magnet holder extends out of the nozzle and mounts a magnet thereto recessed inside the housing. The magnet holder is moveable reciprocally by the reciprocating spool. A sensor body is connected to the housing and holds a magnetic sensing element such as a Hall effect sensor adjacent to the housing for sensing the proximity of the magnetic field of the reciprocating magnet. In other words it discloses a magnetic proximity switch for a reciprocating lubrication distributor block having reciprocating spools therein, comprising:
- a housing having a threaded nozzle for screwing into the block aligned with one of the spools, said threaded nozzle having a longitudinal bore with an open first end and a closed second end;
- a magnet holder held reciprocally within said bore and extendable out of said first end into said block to be abuttable by said spool, said magnet holder reciprocally driven by a pushing force from said spool;
- a magnet held by said holder within said bore; a spring arranged within said housing and urging said magnet holder away from said closed second end, said spring surrounding said magnet;
- a sensor body connected to said housing at said second end;
- a magnetic sensing element mounted within said sensor body outside said housing and responsive to position of a magnetic field created by said magnet through said closed second end.

FR2897933 discloses an "Element's e.g. slide, linear movement detecting device for e.g. hydraulic distributor , has fixed housing integrated with Hall effect sensor, and movable unit including magnet and non-magnetic material body overmolded around magnet". The device has a tube comprising a fixed housing integrated with two Hall effect sensors, and a movable member moving with respect to the housing. The movable unit has a magnet and a non-magnetic material body overmolded around the magnet. One of the Hall effect sensors is connected to a processing unit via a flexible card, and the body and the tube are made of plastic material. The housing further comprising guide means in translation of the movable.

EP1219935 discloses a switching element of the pickup for the hydraulic unit is a reed switch and the operator is a bar magnet. The longitudinal axis of the bar magnet is arranged within at least one section of the path, at least approximately parallel to the longitudinal axis of the reed switch, and approximately parallel to the movement direction. The section determined in size and position within the path, by the reed switch on the basis of a lateral weak region of the force field of the bar magnet, existing in the direction of the longitudinal axis of the bar magnet, is indicated.

US6152172 discloses an hydraulic control valve having a spool slidably received in a bore of the valve body. The spool can be moved in opposite directions to control flow fluid to and from a pair of workports. A sensor assembly has a coupling attached to the spool and holds a permanent magnet. A Hall effect sensor produces an electrical signal indicating the position of the permanent magnet and thus the spool. A double acting spring assembly biases the coupling and spool with respect to the housing of the sensor when the spool moves in one direction, and biases the coupling and spool with respect to the valve body when the spool moves in the other direction.

US2009/0261819 relates to a sensor arrangement is arranged to detect at least one position of a displaceable component in a fluid device, which fluid device comprises a wall enclosing a cavity, in which cavity the component is displaced by pressurized fluid selectively applied to the component. The sensor arrangement includes a magnetic sensor mounted outside the wall and a first sensor element that is connected to the magnetic sensor and extends through the wall and a predetermined distance into the cavity. The magnetic sensor is arranged to detect the position of at least one predetermined second sensor element located on the displaceable component by sensing a change in magnetic flux induced in the first sensor element by the second sensor element.

### Summary Of The Invention

The invention provides an hydraulic valve comprising a body, mono-block or bankable, in which is present at least a spool movable axially for controlling fluid flow which flows in inner channels of said hydraulic valve; the invention relates to at least a sensor designed to sense the position of the spool of said hydraulic valve and give out a corresponding electrical signal.

An object of the present invention is to provide a sensor which is able to detect the position of a spool in a hydraulic valve device and precisely a sensor which measure the linear displacement of the spool of a valve, wherein said measurement is obtained reading, namely sensing, the angle of the magnetic field lines.

It is another object of the invention provide a sensor be readily suitable for existing hydraulic valve.

It is another object of the present invention to provide a sensor is insensitive to external magnetic influences, both environmental, magnetically and electrical.

It is another object of the invention to provide a magnet housing sealable to the block of hydraulic valve and formable a closed compartment for a magnet (i.e., a magnet housing); to provide a sensor body for holding electronics including a sensing element, in which the sensor body is isolated by the magnet housing to prevent oil entrance.

Magnet housing and sensor body are separated, namely modular pieces which can be readily assembled/disassembled together either before or after installation of the sensor to the hydraulic valve device.

The objects of the invention are achieved by the sensor of present invention applied to the hydraulic valve.

Specifically, a magnet provided inside a magnet housing and said sensor body being effectively sealed to the hydraulic body by threaded engagement thereto compressing a gasket or O-ring seal.

The magnet housing is open to the block, particularly to the spool inside the block.

Said sensor is fixed or mounted on the valve by means of thread so that a plunger of the sensor can move axially together with the spool of the hydraulic valve, being plunger kept in contact with spool by a spring placed internal to said housing.

When the magnet moves along with the spool, it creates a variation of magnetic field and a magnetic pickup of a integrated circuit on a printed circuit board, positioned in the sensor, senses the variation of angle of the magnetic field lines and generates an output signal proportional to the movement of the spool.

A magnet holder or magnet carrier is used to hold the magnet within the magnet housing and keeps the magnet steady and protected within said magnet housing.

The magnet holder is constructed preferably of brass or non magnetic steel in order to avoid disturbing or distorting the magnetic field of the permanent magnet into the sensor.

The magnet holder and the magnet housing are adapted such that the magnet holder has two locations of contact or support along its length for stability and guidance as it slides inwardly/outwardly within the housing with the movement of the spool, reducing lateral vibrations and preventing rotation around the axis (AA).

The magnet holder/carrier material can be selected to be compatible with repetitive impact by the spool.

Moreover sensor body is provided for holding an integrated circuit on a printed circuit board.

In a first embodiment such integrated circuit is a Hall Effect type sensor.

In a second embodiment such integrated circuit is a magneto resistive type sensor.

### Brief Description Of The Drawings

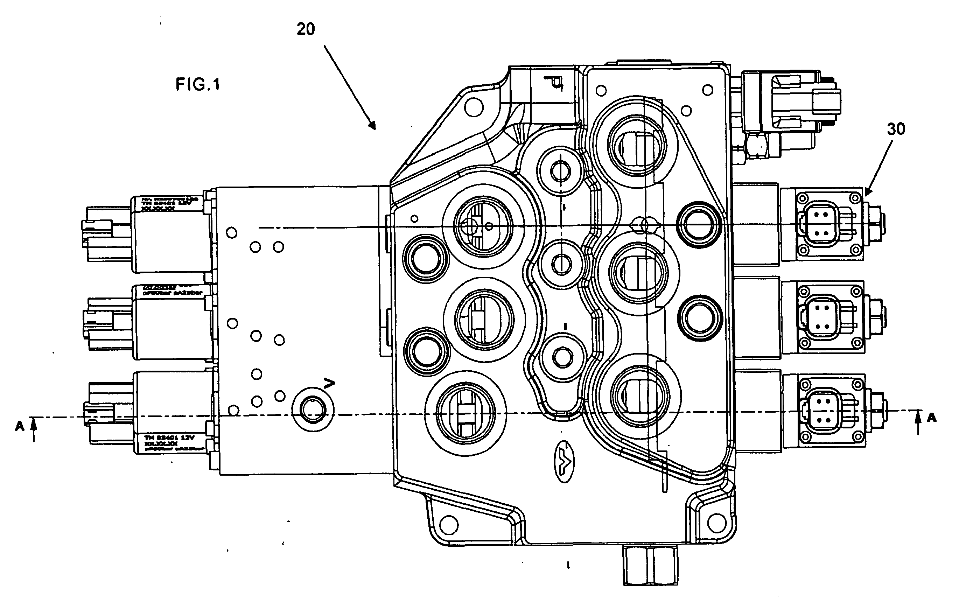

- Fig. 1: is a top view of an hydraulic valve with three spools for controlling fluid flow; each spool having a lateral sensor device attached for sensing the position of said spool and give out a corresponding electrical signal,
- Fig. 2: is a sectional view (A-A) of previous figure,

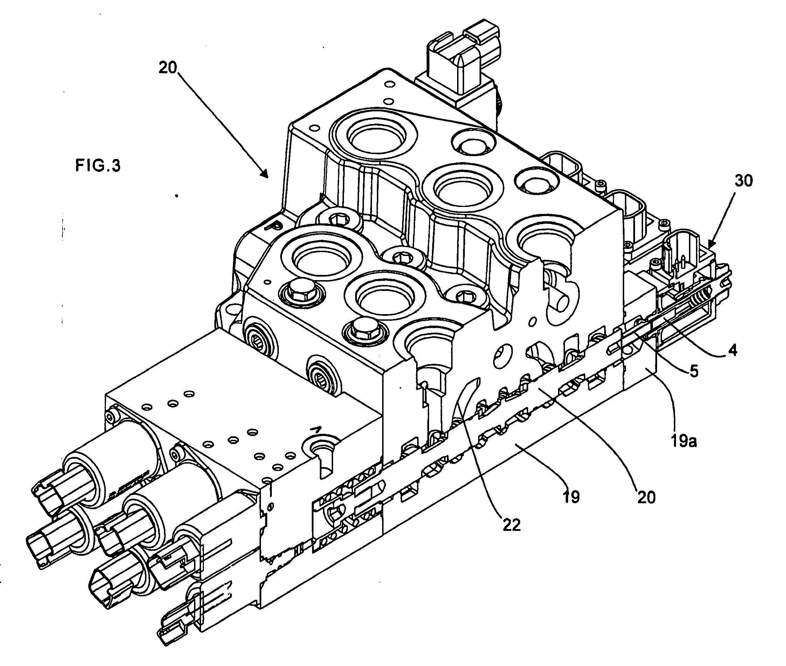

- Fig. 3: shows a prospective view of the hydraulic assembly with sensor drafted in figure 1,

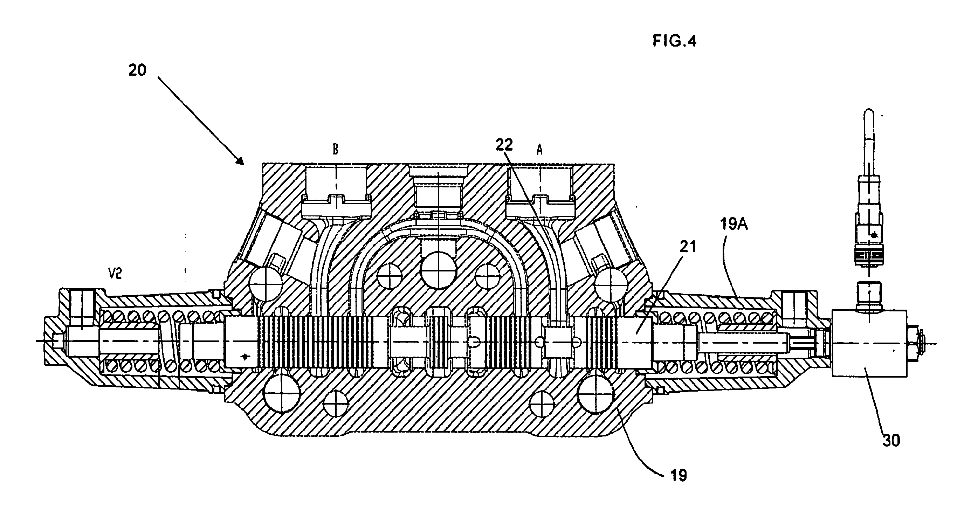

- Fig. 4: shows a section of a bankable hydraulic device with sensor associated,

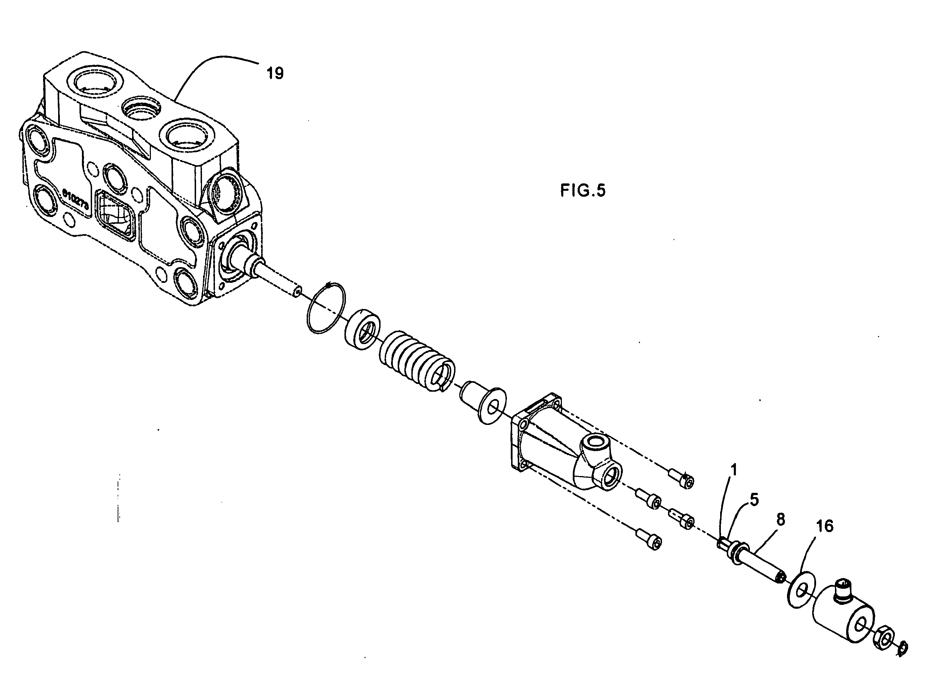

- Fig. 5: shows an exploded view of figure 4,

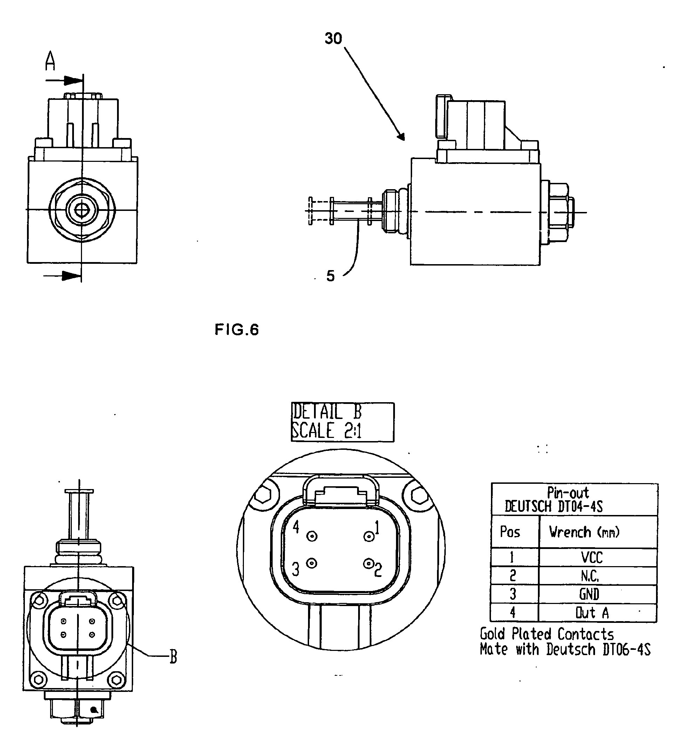

- Fig. 6: shows in details the sensor of previous figures,
- Fig. 7: is an exploded view of the sensor illustrated in figure 6,

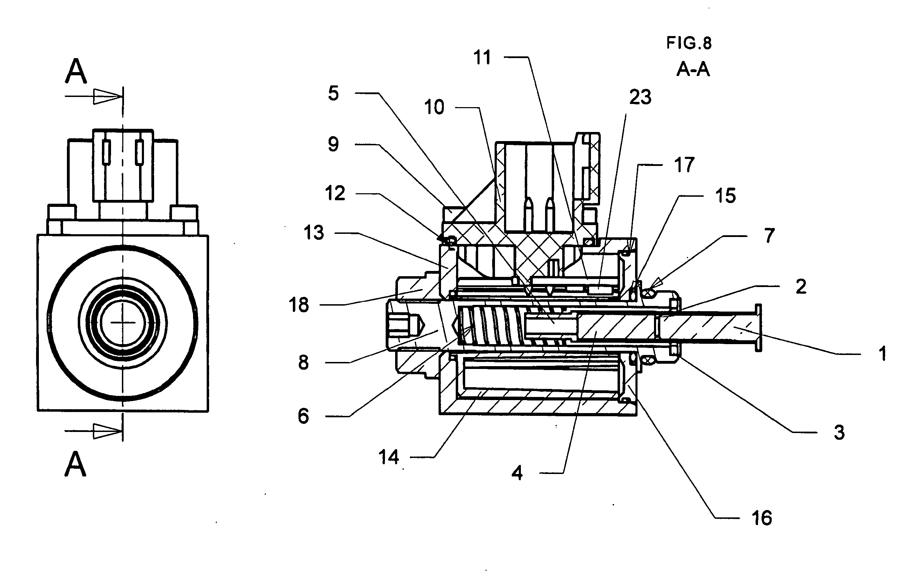

- Fig. 8: is a sectional view of the sensor illustrated in figure 6.

### Description Of The Preferred Embodiments

As illustrated in the figures from 1 to 8, the invention relates to a sensor 30 applied to a hydraulic valve 20.

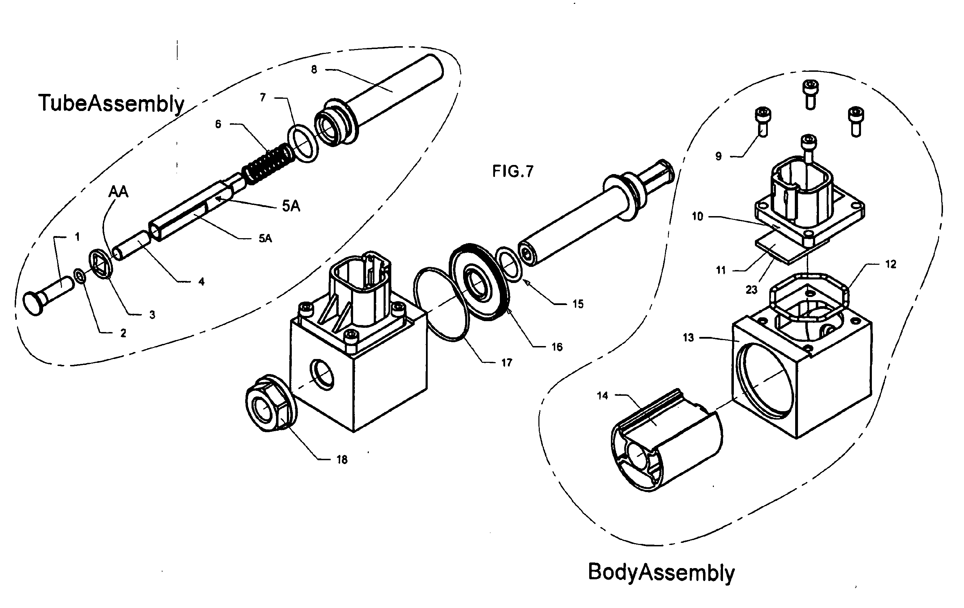

Said sensor 30 comprising at least two main subassemblies applied to said hydraulic device: Tube Assembly and Body Assembly (refer to Fig. 7 - exploded drawing)

Said Tube Assembly (corresponding to parts numbered from 1 to 8) comprises at least:
- a tube 8 designed to resist oil pressure and serve as a magnet housing,
- amoving plunger 1,2,4,5 with a permanent magnet 4 inside; said moving plunger is defined by a magnet carrier 5, having elongated shape; in said magnet carrier 5 is present a bore closed by the plunger 1; eventually one or more spacer 2 will be put inside in order to keep the magnet 4 steady and protected within said bore of magnet carrier 5,
- aspring 6 to keep said moving plunger in contact with the moving spool 21 of the hydraulic valve 20;
- an anti-spin device 3 for preventing the plunger to rotate around its axis AA; said anti-spin device 3 has at least one linear surface suitable to cooperate to a corresponding planar surface of the magnet carrier 5; in the example said anti-spin device 3 is an annular element provided a polygonal central bore and having shape partially corresponding to the section of the magnet carrier 5. The anti-spin device is fixed, e.g., by press-fit, to the inside of the tube 8. This will fix the physical relationship of the magnet 4 with respect to the remaining elements of the sensor 30, e.g., with respect to PC board 11 (discussed below). It is noted that the magnetic field of the magnet 4 may not be uniform and therefore it is important to maintain an indexed relationship between the magnetic field of the magnet 4 and the magnetic pickup 23 of the PC board 11.

Said Tube assembly is further provided with gasket or O-Ring seal for sealing the tube 8, namely the sensor 30, against the valve 20.

The Body Assembly (corresponding to parts numbered from 9 to 18) comprises at least:
- a connector (9,10,12) for power supply and output signals, namely a connector 10, connector screw 9 and connector O-Ring seal 12
- a printed circuit board 11 with the integrated circuit and other electronics
- a body 13 and a tube and PC board holder 14 with a planar surface for supporting the printed circuit board 11; said tube and PC board holder 14 provided with an axial bore which allocates the tube 8 previously defined; said body 13 is constituted by ferromagnetic material
- a non magnetic body cover 16,
- a Seal-lock nut 18 to keep everything together.

With 15 and 17 two gaskets or O-Rings are identified for sealing the tube 8 with the body 13 and the tube and PC board holder 14.

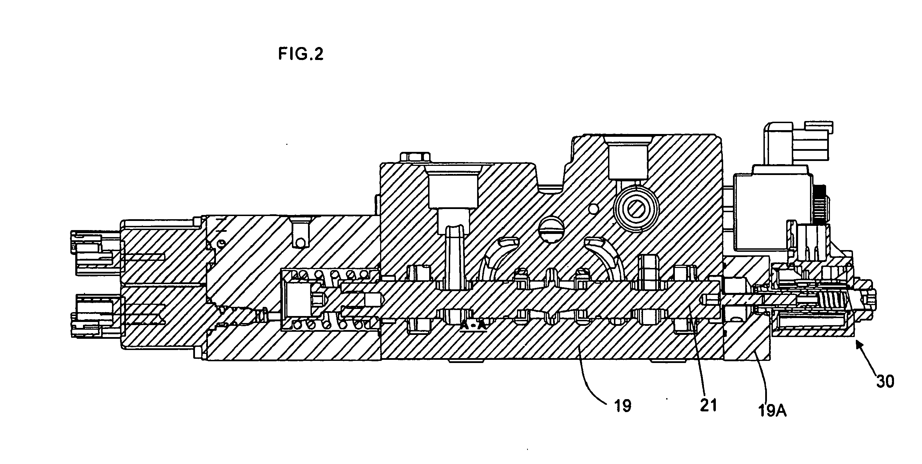

Said Tube Assembly is mounted onto the hydraulic valve body 19 by means of the thread 8A in tube 8; said thread 8A directly engages the body 19 or alternatively it engages an element 19A interposed between said body 19 and the sensor, as shown in figure 2.

The tube 8 together with the body 19 or spacer element 19A creates a closed space where oil flows.

The plunger 1,2,4,5 with the magnet 4 inside, is kept in contact with the valve spool 21 by the spring 6 so that the magnet 4 moves along with the spool 21; so does also the variation of angle of magnetic field created by the magnet.

The integrated circuit on said printed circuit board 11 senses the variation of angle of the magnetic field lines and generates an output signal proportional to the movement of the spool 21.

In embodiment illustrated in the figures such integrated circuit is an Hall Effect type sensor.

However, in a second embodiment, not illustrated, such integrated circuit could be a magneto-resistive type sensor.

The integrated circuit is of the type sensitive to the direction of the magnetic field (variation of angle of the magnetic field lines) and not to the magnitude. This allows larger tolerances in the dimensions of the parts (different air gaps between magnet and Hall chip), allows working in wide temperature ranges (e.g. with high temperatures the magnetic field changes magnitude but does not change direction) and compensates well the aging of the permanent magnet.

Advantages:
- High Pressure Tube: can be used in high pressure control valves;
- Anti spin device: can be used with less expensive magnets;
- integrated circuit sensitive to direction of the magnetic field:
   o can compensate for different air gaps,
   o can work in wide temperature ranges,
   o insensitive to magnet aging,
- Non magnetic body-cover 16: does not disturb the internal magnetic field;
- Magnetic screening body 13 (ferromagnetic): protects from external disturbing magnetic fields;
- Sealed from external contaminants (water, chemicals)
- Programmable:
   o can be adjusted for different valves models,
   o can give different types of output (discrete, continuous, ...), and
   o can be individually calibrated to reduce errors.

With reference to the drawing figures, a preferred embodiment of the inventive hydraulic valve (20) comprises a valve body (19); inner channels (22) within the valve body, the inner channels defining passages for fluid flow; at least a spool (21) present in the body, the spool movable axially in order to control the fluid flow in the inner channels (22); and at least a sensor (30) attached to said body (19), said sensor (30) movable with the spool (21) to i) sense a current position of the spool, and ii) give out a corresponding electrical signal indicating the current position of the spool. The sensor (30) measures a linear displacement of the spool (21) by sensing an angle of magnetic field lines and is attached to said body (19) either i) via an interposed element (19A), or ii) directly to said body (19).

The sensor comprises a tube assembly, which is in turn comprised of at least i) a tube (8) resistant to oil pressure, the tube comprising a thread (8A), the sensor mounted on the valve body by the thread so that the tube together with the valve body create a closed space where oil flows, the tube serving as the magnet housing, ii) a moving plunger (1, 2, 4, 5) having an axis (AA), iii) a magnet carrier (5) with a permanent magnet (4) located in an inside of the magnet carrier, iv) a spring (6) placed internal to the tube (8) and acting against the magnet carrier (5), the spring keeping the plunger, with the magnet (4) inside the magnet carrier, in contact with the spool (21), v) an anti-spin device (3) cooperating with the moving plunger and preventing the moving plunger from rotating around the axis (AA); and a body assembly,

The body assembly comprises at least i) a connector (9,10,12) for power supply and output signals, ii) a printed circuit board (11) with an integrated circuit, iii) a body (13) supporting the integrated circuit and the tube, iv) a tube and PC board holder (14) within the body, v) a non-magnetic body cover (16), and vi) a seat-lock nut (18) keeping the tube assembly mounted in the body assembly.

With this arrangement, the magnet moves along with the spool and creates a variation in a magnetic field during movement with the spool, and the integrated circuit measures a linear displacement of the spool (21) by sensing a variation in an angle of magnetic field lines of the magnetic field from the permanent magnetic and generates an output signal proportional to the movement of the spool (21).

Advantageously, the body (13) of the body assembly is comprised of a ferromagnetic material protecting the sensor from external disturbing magnetic fields. Further, the magnet carrier may be comprised of one of brass and non-magnetic steel, the magnet carrier not distorting the magnetic field from the permanent magnet.

Either gaskets and O-rings (12, 15, 17) serve for sealing i) the non-magnetic body cover (16) with the tube (8), ii) the non-magnetic body cover (16) with the body (13) of the body assembly, and iii) the connector (10) with the body (13) .

Also either a gasket or an O-ring (7) may be provided for sealing the tube (8) against the valve body (19).

In order to maintain an indexed relationship between the magnetic field of the magnet 4 to the magnetic pickup 23 of the PC board 11, the anti-spin device (3) is fixed to an interior surface of the tube (8), thereby preventing the magnet (4) and magnet carrier (5) of the moving plunger from rotating around the axis (AA). Further, the PC board holder (14) is adapted to support the PC board (11) and maintain the indexed relationship between the magnetic field of the magnet (4) and the magnetic pickup of the PC board (11).

The magnetic pickup (23) of the integrated circuit is sensitive to the direction of the magnetic field and is insensitive to a magnitude of the magnetic field. The sensor (30) may be, e.g., a "Hall Effect" sensor or a magneto-resistive sensor. Further the sensor (30) is programmable. The sensor (30) provides plural, different types of outputs and be calibrated in order to reduce errors. Such a sensor can be adapted to different valve models.

### DETAILED DESCRIPTION

| Number | Name |
|---|---|
| 1 | Plunger |
| 2 | Magnet spacer |
| 3 | Anti-spin |
| 4 | Magnet |
| 5 | Magnet Carrier |
| 6 | Spring |
| 7 | Tube-Valve OR |
| 8 | Tube |
| 9 | Connector Screws |
| 10 | Connector |
| 11 | Printed circuit board (PCB) |
| 12 | Connector OR |
| 13 | Body |
| 14 | Tube and PC board holder |
| 15 | Tube-Body OR |
| 16 | Body Cover |
| 17 | Body Cover OR |
| 18 | Seal-lock NT |
| 19 | Body of hydraulic valve |
| 20 | Hydraulic valve |
| 21 | Spool |
| 22 | Internal channels |
| 23 | Magnetic pickup |

## Claims

1. A hydraulic valve (20), comprising:
a valve body (19);
inner channels (22) within the valve body, the inner channels defining passages for fluid flow;
at least a spool (21) present in the body, the spool movable axially in order to control the fluid flow in the inner channels (22); and
at least a sensor (30) attached to said body (19), said sensor (30) movable with the spool (21) to i) sense a current position of the spool, and ii) give out a corresponding electrical signal indicating the current position of the spool, **characterized in that**
said sensor (30) measures a linear displacement of the spool (21) by sensing an angle of magnetic field lines; and that
said sensor comprises:
a tube assembly comprising at least
i) a tube (8) resistant to oil pressure, the tube comprising a thread (8A), the sensor mounted on the valve body by the thread so that the tube together with the valve body create a closed space where oil flows, the tube serving as a magnet housing,
ii) a moving plunger (1, 2, 4, 5) having an axis (AA),
iii) a magnet carrier (5) with a permanent magnet (4) located in an inside of the magnet carrier,
iv) a spring (6) placed internal to the tube (8) and acting against the magnet carrier (5), the spring keeping the plunger, with the magnet (4) inside the magnet carrier, in contact with the spool (21),
v) an anti-spin device (3) cooperating with the moving plunger fixed to an interior surface of the tube (8), thereby preventing the magnet (4) and magnet carrier (5) of the moving plunger from rotating around the axis (AA),
and
a body assembly comprising at least
i) a connector (9,10,12) for power supply and output signals,
ii) a printed circuit board (11) with an integrated circuit serving as magnetic pickup (23),
iii) a body (13) supporting the integrated circuit and the tube,
iv) a tube and PC board holder (14) within the body,
v) a non-magnetic body cover (16), and
vi) a seal-lock nut (18) keeping the tube assembly mounted in the body assembly, wherein,
said magnet moves along with the spool and creates a variation in a magnetic field during movement with the spool, and
the integrated circuit measures a linear displacement of the spool (21) by sensing a variation in an angle of magnetic field lines of the magnetic field from the permanent magnetic and generates an output signal proportional to the movement of the spool (21).

2. The hydraulic valve of claim 1, **characterized in that** said body (13) of the body assembly is comprised of a ferromagnetic material protecting the sensor from external disturbing magnetic fields.

3. The hydraulic valve of claim 1, **characterized in that** the magnet carrier is comprised of one of brass and non-magnetic steel, the magnet carrier not distorting the magnetic field from the permanent magnet.

4. The hydraulic valve of claim 1, **characterized in that** further comprises one of gaskets and O-rings (12, 15, 17) sealing i) the non-magnetic body cover (16) with the tube (8), ii) the non-magnetic body cover (16) with the body (13) of the body assembly, iii) the connector (10) with the body (13) of the body assembly.

5. The hydraulic valve of claim 1, **characterized in that** further comprises one of a gasket and an O-ring (7) sealing the tube (8) against the valve body (19).

6. The hydraulic valve of claim 1, **characterized in that** the PC board holder (14) is adapted to support the PC board (11) and maintain an indexed relationship between the magnetic field of the magnet (4) and the magnetic pickup (23) of the PC board (11).

7. The hydraulic valve of claim 1, wherein the magnetic pickup of the integrated circuit is sensitive to the direction of the magnetic field and is insensitive to a magnitude of the magnetic field.

8. The hydraulic valve of claim 1, **characterized in that** said sensor (30) is a "Hall Effect" sensor.

9. The hydraulic valve of claim 1, **characterized in that** said sensor (30) is a magneto-resistive sensor.

10. The hydraulic valve of claim 1, **characterized in that** the sensor (30) is programmable.

11. The hydraulic valve of claim 10, **characterized in that** the sensor (30) provides plural, different types of outputs.

12. The hydraulic valve of claim 10, **characterized in that** the sensor (30) can be calibrated.

13. The hydraulic valve of claim 1, **characterized in that** said sensor is attached to said body (19) via an interposed element (19A).

14. The hydraulic valve of claim 1, **characterized in that** said sensor is attached directly to said body (19).

## Patentansprüche

1. Hydraulikventil (20), umfassend:
einen Ventilkörper (19);
innere Kanäle (22) im Ventilkörper, wobei die innere Kanäle Durchgänge für Fluidströmung definieren;
mindestens eine Spule (21) die im Körper vorhanden ist, wobei die Spule sich axial bewegen kann, um die Fluidströmung in den inneren Kanälen (22) zu steuern; und
mindestens einen am besagten Körper (19) angebrachten Sensor (30), wobei der besagte Sensor (30) sich derart mit der Spule (21) bewegen kann, dass er i) eine aktuelle Lage der Spule erfasst, und ii) ein entsprechendes elektrischen Signal zu geben, das die aktuelle Lage der Spule angibt, **dadurch gekennzeichnet, dass**
der besagte Sensor (30) eine lineare Verlagerung der Spule (21) misst, indem er einen Winkel von magnetischen Feldlinien erfasst; und dass
der besagte Sensor umfasst:
eine rohrförmige Gruppe enthaltend
i) ein gegen Öldruck beständiges Rohr, wobei das Rohr ein Gewinde (8A) umfasst, der Sensor derart auf dem Ventilkörper mittels der Gewinde angebracht wird, dass das Rohr zusammen mit dem Ventilkörper einen geschlossenen Raum erzeugt wo Öl fließt, wobei das Rohr als ein Magnet-Gehäuse dient,
ii) einen beweglichen Kolben (1, 2, 4, 5) der eine Achse (AA) aufweist,
iii) einen Magnetträger (5) mit einem Permanentmagneten (4), das sich im Inneren des Magnetträgers befindet,
iv) eine Feder (6), die sich im Inneren des Rohres (8) befindet und gegen den Magnetträger (5) wirkt, wobei die Feder den Kolben, mit dem Magneten (4) im Inneren des Magnetträgers, in Berührung mit der Spule (21) hält,
v) ein Anti-Spin-Gerät (3), das mit dem auf einer inneren Fläche des Rohres (8) befestigten Kolben zusammenarbeitet, wobei es eine Drehung des Magneten (4) und der Magnetträgers (5) des beweglichen Kolbens um die Achse (AA) verhindert,
und
eine Körpereinheit umfassend mindestens
i) einen Verbinder (9, 10, 12) für Energiezufuhr und Ausgangssignale,
ii) eine Leiterplatte (11) mit einer integrierten Schaltung, die als magnetisches Pick-Up dient,
iii) einen Körper (13) der die integrierte Schaltung und das Rohr unterstützt,
iv) ein Rohr und einen Leiterplattenträger (14) im Inneren des Körpers,
v) eine nicht-magnetische Körperabdeckung (16), und
vi) eine Siegel-Sicherungsmutter (18), die die im Körpergruppe angebrachte Rohrgruppe hält, wobei
das besagte Magnet sich zusammen mit der Spule bewegt und eine Veränderung in einem magnetischen Feld während der Bewegung mit der Spule erzeugt, und
die integrierte Schaltung eine lineare Verlagerung der Spule (21) misst, indem sie eine Veränderung eines Winkels von magnetischen Feldlinien aus dem Permanentmagneten erfasst, und ein Ausgangssignal erzeugt, das proportional zu der Bewegung der Spule (21) ist.

2. Hydraulikventil nach Anspruch 1, **dadurch gekennzeichnet**, das der besagte Körper (13) der Körperanordnung aus einem ferromagnetischen Material besteht, der den Sensor gegen äußere magnetische Störfelder schützt.

3. Hydraulikventil nach Anspruch 1, **dadurch gekennzeichnet, dass** der Magnetträger aus Messing und einem nichtmagnetischen Stahl besteht, wobei der Magnetträger das magnetische Feld vom Permanentmagnet nicht verzerrt.

4. Hydraulikventil nach Anspruch 1, **dadurch gekennzeichnet, dass** es ferner Dichtungen und O-Ringe (12, 15, 17) umfasst, die i) die Abdeckung (16) des nichtmagnetischen Körpers mit dem Rohr (8), ii) die Abdeckung (16) des nichtmagnetischen Körpers (13) mit dem Körper (13) der Körperanordnung, iii) den Verbinder (10) mit dem Körper (13) der Körperanordnung abdichtet.

5. Hydraulikventil nach Anspruch 1, **dadurch gekennzeichnet, dass** es weiter eine Dichtung und einen O-Ring (7) umfasst, die das Rohr (8) gegen den Ventilkörper (19) abdichten .

6. Hydraulikventil nach Anspruch 1, **dadurch gekennzeichnet, dass** der PC-Kartenhalter (14) geeignet ist, die PC-Karte zu unterstützen und eine indizierte Beziehung zwischen dem magnetischen Feld des Magneten (4) und dem magnetischen Pick-Up (23) der PC-Karte (11) zu halten.

7. Hydraulikventil nach Anspruch 1, bei dem das magnetische Pick-Up der integrierten Schaltung auf der Richtung des magnetischen Feldes empfindlich und auf einer Größe des magnetischen Feldes unempfindlich ist.

8. Hydraulikventil nach Anspruch 1, **dadurch gekennzeichnet, dass** das besagte Sensor (30) ein "Hall-Effect" Sensor ist.

9. Hydraulikventil nach Anspruch 1, **dadurch gekennzeichnet, dass** das besagte Sensor (30) ein magnetoresistives Sensor ist.

10. Hydraulikventil nach Anspruch 1, **dadurch gekennzeichnet, dass** das Sensor (30) programmierbar ist.

11. Hydraulikventil nach Anspruch 10, **dadurch gekennzeichnet, dass** das Sensor (30) eine Mehrheit von verschiedenen Typen von Ausgängen aufweist.

12. Hydraulikventil nach Anspruch 10, **dadurch gekennzeichnet, dass** das Sensor (30) kalibriert werden kann.

13. Hydraulikventil nach Anspruch 1, **dadurch gekennzeichnet, dass** das besagte Sensor mit dem besagten Körper (19) mittels eines zwischengelagerten Elementen (19A) verbunden ist,

14. Hydraulikventil nach Anspruch 1, **dadurch gekennzeichnet, dass** das besagte Sensor unmittelbar mit dem besagten Körper befestigt ist.

## Revendications

1. Valve hydraulique (20), comprenant :
un corps de valve (19) ;
des canaux internes (22) à l'intérieur du corps de valve, les canaux internes définissant des passages pour un flux d'un fluide ;
au moins une bobine (21) présente dans le corps, la bobine étant mobile axialement en manière de contrôler le flux du fluide dans les canaux internes (22) ; et
au moins un capteur (30) fixé audit corps (19), ledit capteur (30) étant mobile à l'intérieur de la bobine (21) pour i) capter une position courante de la bobine, et ii) émettre un signal électrique correspondant indiquant la position courante de la bobine, **caractérisée en ce que**
ledit capteur (30) mesure un déplacement latéral de la bobina (21) en captant un angle de lignes de champ magnétique ; et que
ledit capteur comprend :
un ensemble de tube comprenant au moins
(i) un tube (8) résistant à la pression d'un huile, le tube comprenant un filetage (8A), le capteur étant monté sur le corps de valve par le filetage de sorte que le tube avec le corps de valve crée un espace fermé dans lequel circule l'huile, le tube servant de boîtier d'aimant,
(ii) un piston mobile (1, 2, 4, 5) avec un axe (AA),
(iii) un support d'aimant (5) avec un aimant permanent (4) situé dans l'intérieur du support d'aimant,
(iv) un ressort (6) placé à l'intérieur du tube (8) et agissant contre le support d'aimant (5), le ressort gardant le piston, avec l'aimant (4) à l'intérieur du support d'aimant, en contact avec la bobine (21),
(v) un dispositif anti-patinage (3) coopérant avec le piston mobile fixé è une surface interne du tube (8), de sorte d'empêcher une rotation de l'aimant (4) e du support d'aimant (5) du piston mobile autour de l'axe (AA),
et
un ensemble de corps comprenant au moins
i) un connecteur (9, 10, 12) pour alimenter une énergie et émettre des signaux,
ii) une carte de circuit imprimé (11) avec un circuit intégré servant come un capteur magnétique (23),
iii) un corps (13) supportant le circuit intégré et le tube,
iv) un tube et un support de carte PC (14) à l'intérieur du corps
v) une couvercle (16) du corps non magnétique, et
vi) un joint d'écrou de blocage (18) gardant l'ensemble de tube monté dans l'ensemble de corps, dans lequel
ledit aimant se déplace avec la bobine et crée une variation dans un champ magnétique pendant le déplacement avec la bobine, et
le circuit intégré mesure un déplacement linéaire de la bobine (21) en captant une variation d'un angle des lignes du champ magnétique par l'aimant permanent et génère un signal de sortie proportionnel au déplacement de la bobine (21).

2. Valve hydraulique selon la revendication 1, **caractérisée en ce que** ledit corps (13) de l'ensemble de corps est composé par un matériau ferromagnétique qui protège le capteur des champs magnétiques perturbateurs externes.

3. Valve hydraulique selon la revendication 1, **caractérisée en ce que** le support d'aimant est composé par un laiton et un acier non-magnétique, le support d'aimant ne faussant pas le champ magnétique par l'aimant permanent.

4. Valve hydraulique selon la revendication 1, **caractérisée en ce que** qu'elle comprend aussi des joints d'étanchéité et des joints toriques (12, 15, 17) en sellant i) le couvercle (16) du corps non magnétique (16) avec le tube (8), ii) le couvercle (16) du corps non magnétique avec le corps (13) de l'ensemble de corps, iii) le connecteur (10) avec le corps (13) de l'ensemble de corps.

5. Valve hydraulique selon la revendication 1, **caractérisée en ce qu'**elle comprend un joint d'étanchéité et un joint torique (7) sellant le tube (8) contre le corps (19) de valve.

6. Valve hydraulique selon la revendication 1, **caractérisée en ce que** le support de carte PC (14) est adapté pour supporter la carte PC (11) et maintenir une relation indexée entre le champ magnétique de l'aimant (4) et le capteur magnétique (23) de la carte PC (11).

7. Valve hydraulique selon la revendication 1, dans laquelle le capteur magnétique du circuit intégré est sensible à la direction du champs magnétique et insensible à une grandeur du champ magnétique.

8. Valve hydraulique selon la revendication 1, **caractérisée en ce que** le dit capteur (30) est un capteur « à effet Hall».

9. Valve hydraulique selon la revendication 1, **caractérisée en ce que** ledit capteur (30) est un capteur magnéto-résistif.

10. Valve hydraulique selon la revendication 1, **caractérisée en ce que** le capteur (30) est programmable.

11. Valve hydraulique selon la revendication 10, **caractérisée en ce que** le capteur (30) présente une pluralité de types différents de sorties.

12. Valve hydraulique selon la revendication 10, **caractérisée en ce que** le capteur (30) peut être étalonné.

13. Valve hydraulique selon la revendication 1, **caractérisée en ce que** ledit capteur (30) est fixé audit corps (19) par l'intermédiaire d'un élément intercalaire.

14. Valve hydraulique selon la revendication 1, **caractérisée en ce que** ledit capteur est fixé directement audit corps (19).
